# EUROPÄISCHE PATENTSCHRIFT

(11) **EP 1 074 081 B1**
(45) Veröffentlichungstag und Bekanntmachung des Hinweises auf die Patenterteilung: **14.08.2002**
(21) Anmeldenummer: 99919117.4
(22) Anmeldetag: 24.03.1999
(51) Int. Cl.: H02H 11/00

(54) **VERPOLSCHUTZSCHALTUNG**
POLARITY REVERSAL PROTECTION CIRCUIT
CIRCUIT A PROTECTION CONTRE L'INVERSION DE POLARITE

(30) Priorität: 21.04.1998 DE 19817790
(43) Veröffentlichungstag der Anmeldung: 07.02.2001
(73) Patentinhaber: SIEMENS AKTIENGESELLSCHAFT, 80333 München (DE)
(72) Erfinder: SANDER, Rainald, D-81543 München (DE); XU, Chihao, D-81249 München (DE); GANTIOLER, Josef-Matthias, D-81925 München (DE)
(74) Vertreter: Patentanwälte Westphal, Mussgnug & Partner
(86) Internationale Anmeldenummer: DE9900882
(87) Internationale Veröffentlichungsnummer: WO9954983

(56) Entgegenhaltungen:
- EP-A- 0 360 991
- US-A- 5 410 441

## Beschreibung

Die Erfindung betrifft eine Verpolschutzschaltung.

Das Problem bei Leistungs-Halbleiterschaltern und insbesondere MOS-Halbleiterschaltern gegenüber einem Relais ist seine technologisch bedingte Diode zwischen dem Source-Anschluß und dem Drain-Anschluß des MOS-Halbleiterschalters. Diese im MOS-Halbleiterschalter integrierte Diode, die auch als Inversdiode bezeichnet wird, ist bei Verpolung der Betriebsspannung in Flußrichtung gepolt und führt so zum Stromfluß durch die an den Source-Anschluß oder Drain-Anschluß angeschlossenen Lastelemente. Um hier einen wirkungsvollen Schutz der Lastelemente und des MOS-Halbleiterschalters vor Verpolung zu bieten, wird regelmäßig eine Verpolschutzschaltung in Reihe zum MOS-Halbleiterschalter geschaltet. Die Verpolschutzdiode ist hierbei so gepolt, daß im Normalbetrieb, also richtigem Anschluß der Versorgungsspannung an die Klemmen der Schaltungsanordnung, ein Stromfluß durch die Verpolschutzdiode stattfinden kann. Im Verpolfall, also bei falsch an die Klemmen der Schaltungsanordnung angeschlossener Betriebsspannung, sperrt dagegen diese Verpolschutzdiode.

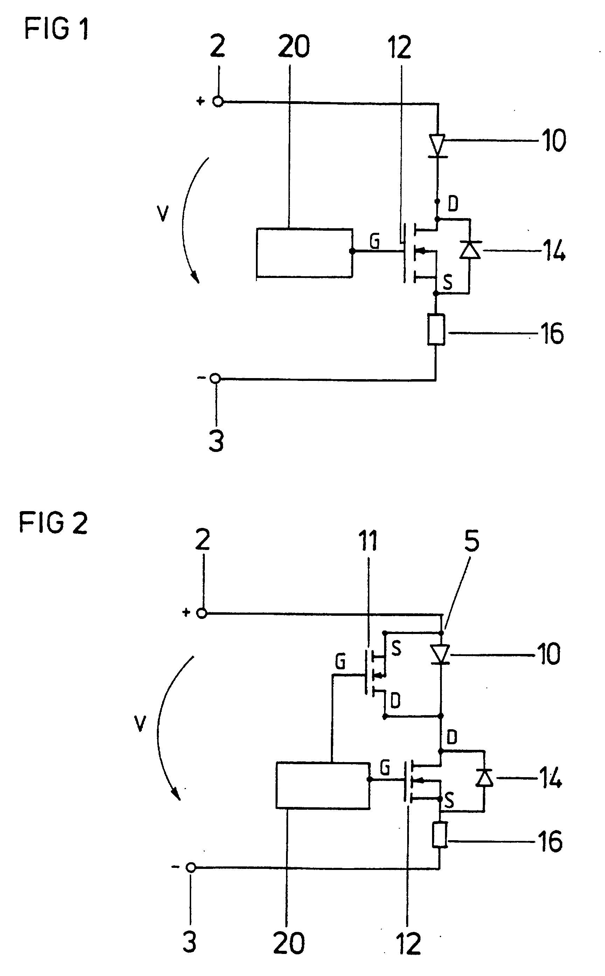

In Figur 1 ist eine hierfür geeignete Schaltungsanordnung dargestellt. Die Betriebsspannung V ist an zwei Klemmen 2, 3 anlegbar, um eine Last 16, gesteuert von einem Halbleiterschalter 12 mit Spannung zu versorgen. Die Last 16 kann beispielsweise die Lampe eines Scheinwerfers eines Kfz sein, die bei Bedarf vom Fahrer eingeschaltet wird. Im einzelnen liegt zwischen der Klemme 2 und 3 die Reihenschaltung der bereits erwähnten Verpolschutzdiode 10, des Halbleiterschalters 12 und der Last 16 an. Der Anodenanschluß der Verpolschutzdiode 10 ist mit der Klemme 2 in Verbindung und der Kathodenanschluß der Verpolschutzdiode 10 an den Drain-Anschluß D des Halbleiterschalters 12, der vorliegend als MOS-Halbleiterschalter ausgebildet ist, angeschlossen. Der Source-Anschluß S ist an eine Klemme der Last 16 geschaltet, deren andere Klemme mit der Klemme 3 in Verbindung steht. Parallel zur Laststrecke des Halbleiterschalters 12 und damit zwischen dessen Drain-Anschluß D und Source-Anschluß S ist eine Inversdiode 14 geschaltet. Der Anodenanschluß dieser Inversdiode 14 ist mit dem Source-Anschluß S und der Kathodenanschluß mit dem Drain-Anschluß D in Verbindung. Gesteuert wird der Halbleiterschalter 12 an seinem Steueranschluß bzw. Gate-Anschluß G von einer Steuereinrichtung 20, die dem Fachmann hinlänglich bekannt ist.

Die in Figur 1 dargestellte Schaltungsanordnung zeigt einen sogenannten Highside-Schalter. Der Halbleiterschalter 12 liegt nämlich bei Normalbetrieb über der Verpolschutzdiode 10 an dem positiven Pol der Versorgungsspannungsklemme. In Figur 1 ist der Normalbetrieb dargestellt, d.h. daß der positive Pol der Versorgungsspannung V an die Klemme 2 und der negative Pol an die Klemme 3 angeschlossen wird.

Problematisch bei der in Figur 1 dargestellten Schaltungsanordnung ist die durch die Verpolschutzdiode 10 bedingte Verlustleistung, die im Normalbetrieb ständig verbraucht wird, weil der Stromfluß zwingend durch die in Flußrichtung gepolte Verpolschutzdiode 10 fließen muß. Die Verlustleistungen sind vor allem dann außerordentlich hoch, wenn der Halbleiterschalter 12 hohe Ströme schalten soll. In diesem Fall ist der Spannungsabfall an der Verpolschutzdiode 10 häufig unakzeptabel hoch, weil dadurch die effektive Spannung an der Last 16 reduziert wird.

In der EP 0 360 991 A2 (vgl. Fig.2 der Anmeldung) ist eine Schaltungsanordnung zum Schutz vor Verpolung mit einem ersten Halbleiterschalter und einer Verpolschutzdiode beschrieben. Parallel zur Verpolschutzdiode ist ein weiterer Halbleiterschalter vorgesehen, wobei die beiden Halbleiterschalter von derselben Steuereinrichtung angesteuert werden. Im Normalbetrieb ist der weitere Halbleiterschalter eingeschaltet. Im Verpolungsfall bricht der weitere Halbleiterschalter durch und schützt somit die Treiberschaltung bzw. die Last.

In dem US-Patent US 5,410,441 ist eine Schaltungsanordnung zum Schutz gegen Überspannung beschrieben. Auch hier ist ein Halbleiterschalter mit parallel geschalteter Verpolschutzdiode und ein weiterer Halbleiterschalter vorgesehen. Die Schaltung weist dort einen Schaltungsteil auf, der die an dem Halbleiterbauelement angelegte Spannung überwacht. Befindet sich die überwachte Spannung unterhalb eines bestimmten Schwellenwertes, dann bleibt der Steuerausgang der Spannungs über wachungseinrichtung im hochohmigen Zustand. Für den Fall, dass die Versorgungsspannung unzulässig hoch wird, wird der Ausgang der Spannungsüberwachungsschaltung niederohmig und steuert somit die beiden Transistoren in den ausgeschalteten Zustand.

Der Erfindung liegt deshalb die Aufgabe zugrunde, bei einer bekannten Verpolschutzanordnung eine verbesserte Abschalteinrichtung vor zu sehen.

Diese Aufgabe wird durch eine Verpolschutzschaltung mit den Merkmalen des Anspruchs 1 gelöst.

Weiterbildungen der Erfindung sind Gegenstand der Unteransprüche.

Die Verpolschutzschaltung, wie in den Figuren dargestellt, sieht im wesentlichen vor, daß parallel zur Verpolschaltung ein weiterer steuerbarer Halbleiterschalter geschaltet ist, welcher von einer Steuerschaltung im Normalbetrieb mindestens während der Einschaltzeiten des Halbleiterschalters eingeschaltet ist und welcher im Verpolungsfall der Versorgungsspannung ausgeschaltet ist.

Diese Maßnahme hat den entscheidenden Vorteil, daß im Normalbetrieb, also richtig herum an die Klemmen angeschlossene Versorgungsspannung, die Verpolschutzdiode 10 überbrückt ist und damit eine lediglich durch den Spannungsabfall des eingeschalteten Halbleiterschalters bedingte Verlustleistung in der Schaltungsanordnung auftritt. Diese Verlustleistung des eingeschalteten weiteren Halbleiterschalters ist erheblich geringer als die Verlustleistung durch die Verpolschutzdiode.

Die beiden erwähnten Halbleiterschalter, also der Leistungshalbleiterschalter zum Einschalten des Stromes für die Last und der parallel zur Verpolschutzdiode geschaltete, kleiner dimensionierbare Halbleiterschalter, sind jeweils durch MOS-Transistoren realisiert.

Zweckmäßiger Weise ist die ohnehin bei MOS-Halbleiterschaltern vorhandene Inversdiode als Verpolschutzdiode der Verpolschutzschaltung vorgesehen. Hierbei ist der Source-Anschluß des weiteren Halbleiterschalters mit derjenigen Klemme der Versorgungsspannung im Normalbetrieb verbunden, bei der positives Potential abgreifbar ist. Der Drain-Anschluß dieses weiteren Halbleiterschalters ist mit dem Drain-Anschluß des Leistungs-Halbleiterschalters in Verbindung und der Source-Anschluß des Leistungs-Halbleiterschalters über die Last an die zweite Klemme der Versorgungsspannung, an der negatives Potential oder Bezugspotential abgreifbar ist, angeschlossen. Der Gateanschluß des weiteren Halbleiterschalters ist über die erwähnte Steuerschaltung so ansteuerbar, daß der weitere Halbleiterschalter im Normalbetrieb immer eingeschaltet ist oder zumindest dann leitet, wenn auch der Leistungs-Halbleiterschalter leitet. Im Verpolungsfall dagegen wird der weitere Halbleiterschalter blockiert und damit ausgeschaltet, so daß die Verpolschutzdioder ihre Sperrfunktion erfüllen kann.

Die gesamte Verpolschutzschaltung kann als monolithisch integrierte Schaltungsanordnung ausgebildet sein. Die erfindungsgemäße Verpolschutzschaltung ist jedoch nicht hierauf beschränkt, sondern kann auch diskret aufgebaut sein oder in mehrere Halbleiterchips integriert sein. Die beiden Halbleiterschalter der erfindungsgemäßen Verpolschutzschaltung können in unterschiedlichen Halbleiterkörpern integriert sein.

Die Erfindung wird nachfolgend im Zusammenhang mit einem Ausführungsbeispiel näher erläutert. Es zeigen:
- Fig. 1: die bereits erläuterte bekannte Verpolschutzschaltung nach dem Stand der Technik,
- Fig. 2: eine weitere Verpolschutzschaltung nach dem Stand der Technik, und
- Fig. 3: ein detailliertes Schaltbild einer Ausgestaltung der erfindungsgemässen Verpolschutzanordnung.

In den nachfolgenden Figuren bezeichnen, sofern nicht anders angegeben, gleiche Bezugszeichen gleiche Teile mit gleicher Bedeutung.

Die in Figur 2 gezeigte Verpolschutzschaltung unterscheidet sich von der in Figur 1 dargestellten Verpolschutzschaltung dadurch, daß parallel zur Verpolschutzdiode 10 ein Halbleiterschalter, hier ein MOS-FET mit seiner Laststrecke geschaltet ist. Im einzelnen ist der Source-Anschluß S mit dem Anodenanschluß der Verpolschutzdiode 10 und damit mit der Klemme 2 der Versorgungsspannung V in Verbindung. Der Drain-Anschluß D ist mit dem Kathodenanschluß der Verpolschutzdiode 10 in Kontakt und damit ebenfalls an den Drain-Anschluß des Leistungs-MOS-FET 12 der Schaltungsanordnung angeschlossen. Die Steuerschaltung 20 weist einen separaten Ausgang auf, der mit dem Gate-Anschluß G des MOS-FET 11 in Kontakt steht und diesen so ansteuert, daß dieser im Normalbetrieb, d.h. bei richtig herum gepolter Versorgungsspannung V leitet, also eingeschaltet ist. Die Steuerschaltung 20 kann jedoch auch ein Steuersignal zur Verfügung stellen, das den MOS-FET 11 immer dann genau einschaltet, wenn auch der Leistungs-MOS-FET 12 einschaltet. Ein solches Ansteuern des MOS-FET 11 führt dazu, daß immer dann, wenn die Last 16 tatsächlich von Strom durchflossen werden soll, die Verpolschutzdiode 10 vom MOS-FET 11 überbrückt ist.

Die Steuerschaltung 20 stellt jedoch darüber hinaus sicher, daß im Verpolungsfall der MOS-FET 11 sperrt. In Figur 2 ist der Normalbetrieb dargestellt. Dies bedeutet, daß der positive Pol der Versorgungsspannung V mit der Klemme 2 und der negative Pol mit der Klemme 3 in Verbindung steht. Im Verpolungsfall würde dagegen der negative Pol der Spannungsklemme V an die Klemme 2 und der positive Pol an die Klemme 3 angeschlossen sein.

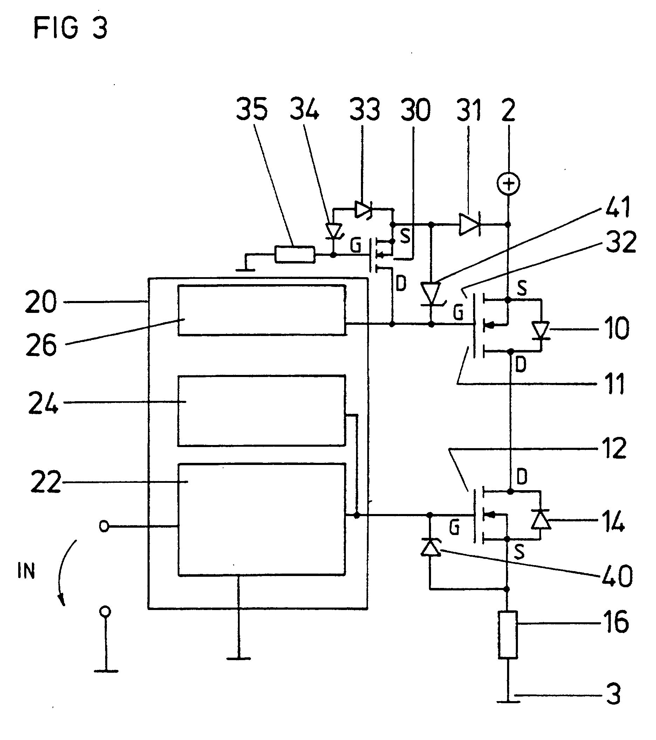

In Figur 3 ist eine Ausgestaltung der erfindungsgemäßen Schaltungsanordnung detailliert dargestellt.

Der Leistungs-MOS-FET 12 wird in an sich bekannter Art und Weise von der Steuerschaltung 20 nach Maßgabe eines Steuersignales IN ein- und ausgeschaltet. Die Steuerschaltung 20 weist hierfür eine Ansteuerungselektronik 22 auf, die das Eingangssignal IN für das Anlegen an den Gate-Anschluß G des Leistungs-MOS-FET 12 aufbereitet. Zusätzlich ist in der Steuerschaltung 20 eine Ladungspumpe 24 vorhanden, die ebenfalls auf den Gate-Anschluß G des Leistungs-MOS-FET 12 wirkt und dafür sorgt, daß bei einem Eingangssignal IN zum Einschalten des Leistungs-MOS-FET 12 ausreichend Strom nachgeliefert wird, um den Leistungs-MOS-FET 12 eingeschaltet zu halten. Eine solche Ladungspumpe 24 ist an sich ebenfalls bekannt. Zwischen den Gate-Anschluß G und Source-Anschluß S des Leistungs-MOS-FET 12 ist eine Zenerdiode 40 geschaltet. Der Anodenanschluß dieser Zenerdiode 40 ist an den Source-Anschluß S und der Kathodenanschluß an den Gate-Anschluß G des Leistungs-MOS-FET 12 gelegt. Die Zenerdiode 40 schützt die Gate-Source-Strecke des Leistungs-MOS-FET.

Der Gate-Anschluß G des weiteren MOS-FET 11 ist ebenfalls mit einer Ladungspumpe 26 in Verbindung. Zusätzlich sind folgende Schaltungskomponenten an den Gate-Anschluß G des MOS-FET 11 geschaltet. Eine weitere Zenerdiode 41 liegt mit ihrem Kathodenanschluß am Gate-Anschluß G des MOS-FET 11. Der Anodenanschluß der Zenerdiode 41 ist mit dem Anodenanschluß einer Diode 31 in Verbindung. Der Kathodenanschluß dieser Diode 31 ist an die Klemme 2 der Verpolschutzschaltung angeschlossen. Parallel zur Zenerdiode 41 liegt die Laststrecke eines Halbleiterschalters, hier ein weiterer MOS-FET 30. Der Drain-Anschluß D des MOS-FET 30 ist an den Gate-Anschluß G des MOS-FET 11 angeschlossen. Der Source-Anschluß S ist mit den Anodenanschlüssen der Zenerdiode 41 und der Diode 31 in Kontakt. Der Gate-Anschluß G des MOS-FET 30 ist über einen Widerstand 35 auf Bezugspotential gelegt und damit vorliegend mit der Klemme 3 der Verpolschutzschaltung in Verbindung. Zusätzlich sind zwei weitere Zenerdioden 33, 34 vorgesehen, die antiseriell zueinander geschaltet sind. Dies bedeutet, daß die beiden Anodenanschlüsse dieser Zenerdioden 33, 34 miteinander in Verbindung stehen. Der Kathodenanschluß der einen Zenerdiode 33 ist mit den Anodenanschlüssen der Zenerdiode 41 und der Diode 31 in Kontakt, während der Kathodenanschluß der Zenerdiode 34 an den Gate-Anschluß G des MOS-FET 30 angeschlossen ist.

Die Verpolschutzdiode 10 muß nicht als separate Diode realisiert sein, sondern kann die im MOS-FET 11 ohnehin vorhandene Inversdiode sein. Die Verpolschutzdiode 10 ist damit in den Halbleiterkörper des MOS-FET 11 integriert.

Die in Figur 3 dargestellte erfindungsgemäße Schaltungsanordnung arbeitet folgendermaßen.

Der MOS-FET 11 wird ebenso wie der Leistungs-MOS-FET 12 über jeweils eine Ladungspumpe 26 bzw. 24 angesteuert, so daß der MOS-FET 11 die Verpolschutzdiode 10 niederohmig überbrückt. Damit bestimmen die beiden Einschaltwiderstände des MOS-FET 11 und des Leistungs-MOS-FET 12 den Spannungsverlust an der Last 16 im Normalbetrieb.

Die Zenerdioden 40, 41 schützen die Gate-Anschlüsse G der beiden MOS-FET 11, 12. Die Diode 31 verhindert einen Stromfluß durch die am Gate-Anschluß G des MOS-FET 11 geschalteten Elemente. Dies ist deshalb notwendig, um parasitäre Effekte zu verhindern, wenn die gesamte Verpolschutzschaltung monolithisch in einen gemeinsamen Halbleiterkörper integriert ist. Die Diode 31 kann deshalb bei dielektrisch isolierter Ausführungsform auch weggelassen werden.

Im Verpolungsfall der Versorgungsspannung V wird ein Stromfluß durch die Last 16 dadurch verhindert, daß der MOS-FET 11 gesperrt wird. Dieses Sperren wird im Verpolungsfall durch den MOS-FET 30 sichergestellt, welcher bei Verpolung über den Widerstand 35 eingeschaltet wird. Im Verpolungsfall liegt nämlich der mit der Klemme 3 verbundene Anschluß des Widerstandes 35 auf positivem Potential, so daß der MOS-FET 30 auch einschalten kann. Der eingeschaltete MOS-FET 30 schließt über die Diode 31 den Gate-Anschluß G des MOS-FET 11 mit dessen Source-Anschluß S kurz. Damit bleibt der MOS-FET 11 ausgeschaltet oder er wird zu diesem Zeitpunkt ausgeschaltet, wenn die Verpolung stattfindet. Die Zenerdioden 33, 34 schützen den Gate-Anschluß G des MOS-FET 30 vor Überspannung.

Im normalen Betriebsfall ist dagegen der MOS-FET 30 über den Widerstand 35 ausgeschaltet, wodurch die Ladungspumpe 26 in der Steuerschaltung 20 den Gate-Anschluß des MOS-FET 11 ungehindert aufladen kann. Der MOS-FET 11 ist deshalb im Normalbetrieb immer eingeschaltet.

Der MOS-FET 11 kann sowohl ein Enhancement- als auch ein Depletion-MOS-FET sein.

Wenn oben erwähnt wurde, daß die gesamte in Figur 3 dargestellte Verpolschutzschaltung als monolithisch integrierter Schaltkreis ausgeführt werden kann, so ist die Erfindung hierauf selbstverständlich nicht beschränkt. Die Verpolschutzschaltung kann auch in mehreren Halbleiterkörpern integriert sein. Zum Beispiel können die beiden MOS-FET 11 und 12 in getrennten Halbleiterkörpern untergebracht sein. Da das Drain die Rückseite der beiden POWER-MOSFET ist, können die beiden Halbleiterkörper auf einem Metallträger, z.B. dem Leadframe eines Gehäuses, montiert werden.

### Bezugszeichenliste

- 2, 3: Klemmen
- 10: Verpolschutzdiode
- 11: weiterer Halbleiterschalter
- 12: Halbleiterschalter
- 14: Inversdiode
- 16: Last
- 20: Steuerschaltung
- 22: Ansteuerelektronik
- 24: Ladungspumpe
- 26: Ladungspumpe
- 30: weiterer Halbleiterschalter
- 31: Diode
- 32: weiterer Halbleiterschalter
- 33, 34: Zenerdioden
- 35: Widerstand
- 40, 41: Zenerdioden

- V: Versorgungsspannung
- S: Source-Anschluß
- G: Gateanschluß, Steueranschluß
- D: Drain-Anschluß
- IN: Eingangssignal

## Patentansprüche

1. Verpolschutzschaltung mit einer zwischen Klemmen (2, 3) einer Versorgungsspannung (V) liegenden Reihenschaltung einer Last (16), eines Halbleiterschalters (12) sowie einer Verpolschutzdiode (10), wobei
parallel zur Verpolschutzdiode (10) ein weiterer Halbleiterschalter (11) geschaltet ist, der einen von einer Ladungspumpe (26) einer Steuereinrichtung (20) versorgbaren Steueranschluß (G) aufweist und von der Steuereinrichtung (20) im Normalbetrieb mindestens während der Einschaltzeiten des Halbleiterschalters (12) eingeschaltet ist,
eine Abschalteinrichtung (30, 35) vorgesehen ist, mittels der die Wirkung der Ladungspumpe (26) im Verpolfall abschaltbar ist, so dass im Verpolungsfall der Versorgungsspannung (V) der der Verpolschutzdiode (10) parallel geschaltete, weitere Halbleiterschalter (11) ausgeschaltet ist,
die Abschalteinrichtung (30, 35) einen weiteren Halbleiterschalter (30) aufweist, welcher mit seiner Laststrecke zwischen die erste Klemme (2) der Versorgungsspannung (V) und den Steueranschluß (G) des parallel zur Verpolschutzdiode (10) geschalteten, weiteren Halbleiterschalters (11) geschaltet ist, wobei der Steueranschluß (G) des weiteren Halbleiterschalters (30) über einen Widerstand (35) mit der zweiten Klemme (3) der Versorgungsspannung (V) in Verbindung steht.

2. Verpolschutzschaltung nach Anspruch 1,
**dadurch gekennzeichnet,**
**daß** der weitere Halbleiterschalter (11) ein MOS-FET mit Inversdiode ist, und dass die Verpolschutzdiode (10) die Inversdiode des MOS-FET ist.

3. Verpolschutzschaltung nach Anspruch 1 oder 2,
**dadurch gekennzeichnet,**
**daß** der Halbleiterschalter (12) ein MOS-FET ist.

4. Verpolschutzschaltung nach Anspruch 2 und 3,
**dadurch gekennzeichnet,**
**daß** an die erste Klemme (2) der Versorgungsspannung (V) der Source-Anschluß (S) des weiteren Halbleiterschalters (11) und dessen Drain-Anschluß (D) an den Drain-Anschluß (D) des Halbleiterschalters (12) geschaltet ist, und dass der Source-Anschluß (S) des Halbleiterschalters (12) über die Last (16) an die zweite Klemme (3) der Versorgungsspannung (V) geschaltet ist.

5. Verpolschutzschaltung nach einem der Ansprüche 1 bis 4,
**dadurch gekennzeichnet,**
**daß** eine Diode (31) zwischen die Laststrecke des weiteren Halbleiterschalters (30) und die erste Klemme (2) der Versorgungsspannung (V) geschaltet ist, derart, daß deren Kathodenanschluss mit der Klemme (2) in Verbindung steht und deren Anodenanschluß an eine Klemme der Laststrecke des weiteren Halbleiterschalters (30) geschaltet ist.

6. Verpolschutzschaltung nach
**dadurch gekennzeichnet,**
**daß** zwischen den Steueranschluß (G) des Halbleiterschalters (12) und den Verbindungspunkt der Last (16) und des Halbleiterschalters (12) eine Zenerdiode (40) geschaltet ist.

7. Verpolschutzschaltung nach einem der Ansprüche 1 bis 6,
**dadurch gekennzeichnet,**
**daß** eine Zenerdiode (41) parallel zur Laststrecke des weiteren Halbleiterschalters (30) geschaltet ist.

8. Verpolschutzschaltung nach einem der Ansprüche 1 bis 7,
**dadurch gekennzeichnet,**
**daß** die Verpolschutzschaltung in einen Halbleiterkörper monolithisch integriert ist.

## Claims

1. A polarity reversal protection circuit having a series circuit lying between terminals (2, 3) of a supply voltage (V) comprising a load, (16), a semiconductor switch (12) and also a polarity reversal protection diode (10), wherein
a further semiconductor switch (11) is connected parallel to the polarity reversal protection diode (10), which switch comprises a gate terminal (G) which can be supplied by a loading pump (26) of a control device (20) and is switched on by the control device (20) in normal operation at least during the turn-on times of the semiconductor switch (12),
a disconnecting device (30, 35) is provided, by means of which the action of the loading pump (26) can be switched off in the event of polarity reversal, so that in the event of the polarity reversal of the supply voltage (V) the further semiconductor switch (11), connected in parallel with the polarity reversal protection diode (10), is switched off,
the disconnecting device (30, 35) comprises a further semiconductor stich (30), which is switched with its load path between the first terminal (2) of the supply voltage (V) and the gate terminal (G) of the further semiconductor switch (11) switched parallel to the polarity reversal protection diode (10), wherein the gate terminal (G) of the further semiconductor switch (30) communicates via a resistor (35) with the second terminal (3) of the supply voltage (V).

2. A polarity reversal protection circuit according to Claim 1,
**characterised in that** the further semiconductor switch (11) is a MOSFET having an inverse diode, **and in that** the polarity reversal protection diode (10) is the inverse diode of the MOSFET.

3. A polarity reversal protection circuit according to Claim 1 or 2,
**characterised in that** the semiconductor switch (12) is a MOSFET.

4. A polarity reversal protection circuit according to Claim 2 and 3,
**characterised in that** the source terminal (S) of the further semiconductor switch (11) is switched to the first terminal (2) of the supply voltage (V) and its drain terminal (D) is switched to the drain terminal (D) of the semiconductor switch (12),
**and in that** the source terminal (S) of the semiconductor switch (12) is switched via the load (16) to the second terminal (3) of the supply voltage (V).

5. A polarity reversal protection circuit according to one of Claims 1 to 4,
**characterised in that** a diode (31) is switched between the load path of the further semiconductor switch (30) and the first terminal (2) of the supply voltage (V) in such a manner that its cathode connection communicates with the terminal (2) and its anode connection is switched to a terminal of the load path of the further semiconductor switch (30).

6. A polarity reversal protection circuit according to
**characterised in that** a Zener diode (40) is switched between the gate terminal (G) of the semiconductor switch (12) and the connection point of the load (16) and of the semiconductor switch (12).

7. A polarity reversal protection circuit according to one of Claims 1 to 6,
**characterised in that** a Zener diode (41) is switched in parallel to the load path of the further semiconductor switch (30).

8. A polarity reversal protection circuit according to one of Claims 1 to 7,
**characterised in that** the polarity reversal protection circuit is integrated monolithically into a semiconductor body.

## Revendications

1. Circuit de protection contre une inversion de polarité comprenant un circuit en série formé d'une charge (16), d'un commutateur semi-conducteur (12) et d'une diode de protection (10) contre l'erreur de polarité, branché entre les bornes (2, 3) d'une tension d'alimentation V, dans lequel en parallèle à la diode de protection (10) un autre composant semi-conducteur (11) comporte une borne de commande (G) alimentée par une pompe de charge (26) d'une installation de commande (20) et en fonctionnement normal, ce commutateur serai-conducteur est branché par l'installation de commande (20) en mode normal, au moins pendant le temps de branchement du commutateur semi-conducteur (12),
une installation de coupure (30, 35) peut couper l'effet de la pompe de charge (26) en cas d'erreur de polarité de sorte que dans ce cas d'inversion de la tension d'alimentation (V), on déclenche l'autre semi-conducteur (11) branché en parallèle à la diode de protection (10), l'installation de coupure (30, 35) comporte un autre commutateur semi-conducteur (30) branché avec son chemin de charge entre la première borne (2) de la tension d'alimentation (V) et la borne de commande (G) de l'autre commutateur semi-conducteur (11) en parallèle sur la diode de protection (10), la borne de commande (G) de cet autre semi-conducteur (30) étant reliée par une résistance (35) à la seconde borne (3) de la tension d'alimentation (V).

2. Circuit de protection selon la revendication 1,
**caractérisé en ce que**
l'autre commutateur serai-conducteur (11) est un MOS-FET avec une diode inversée et la diode de protection (10) est la diode inversée du MOS-FET.

3. Circuit de protection selon l'une quelconque des revendications 1 ou 2,
**caractérisé en ce que**
le commutateur semi-conducteur (12) est un MOS-FET.

4. Circuit de protection selon l'une quelconque des revendications 2 et 3,
**caractérisé en ce que**
la source (S) de l'autre commutateur semi-conducteur (11) est reliée à la première borne (2) de la tension d'alimentation (V) et sa borne de drain (D) est reliée au drain du semi-conducteur (12), et la borne de source (S) du semi-conducteur (12) est reliée par la charge (16) à la seconde borne (3) de la tension d'alimentation (V).

5. Circuit de protection selon l'une quelconque des revendications 1 à 4,
**caractérisé en ce qu'**
une diode (31) est branchée entre le chemin de charge de l'autre commutateur semi-conducteur (30) et la première borne (2) de la tension d'alimentation (V) de façon que sa borne de cathode soit reliée à la borne (2) et que la borne d'anode soit reliée à la borne du chemin de charge de l'autre commutateur semi-conducteur (30).

6. Circuit de protection selon l'une quelconque des revendications 1 à 5,
**caractérisé en ce qu'**
entre la borne de commande (G) du commutateur semi-conducteur (12) et le point de liaison de la charge (16) et du serai-conducteur (12) on a une diode Zener (40).

7. Circuit de protection selon l'une quelconque des revendications 1 à 6,
**caractérisé en ce qu'**
une diode Zener (41) est branchée en parallèle sur le chemin de charge de l'autre commutateur semi-conducteur (30).

8. Circuit de protection selon l'une quelconque des revendications 1 à 7,
**caractérisé en ce qu'**
le circuit de protection est intégré de manière monolithique dans un corps semi-conducteur.
